Europäisches Patentamt

European Patent Office

Office européen des brevets

(11) Publication number: **0 248 770**
**A2**

(12) **EUROPEAN PATENT APPLICATION**

(21) Application number: **87830177.9**

(22) Date of filing: **11.05.87**

(51) Int. Cl.4: **B 61 H 15/00**

(30) Priority: **19.05.86 IT 6741286**

(43) Date of publication of application:
**09.12.87 Bulletin 87/50**

(84) Designated Contracting States:
**AT BE CH DE ES FR GB GR IT LI LU NL SE**

(71) Applicant: **WABCO WESTINGHOUSE COMPAGNIA FRENI S.p.A.**
**Via Pier Carlo Boggio 20**
**I-10138 Torino  (IT)**

(72) Inventor: **Correndo, Roberto**
**Via Europa 15**
**I-10022 Carmagnola Torino  (IT)**

(74) Representative: **Buzzi, Franco et al**
**c/o Jacobacci-Casetta & Perani S.p.A. Via Alfieri, 17**
**I-10121 Torino  (IT)**

(54) **Shoe brake for railway vehicles.**

(57) A brake for the wheels of a railway vehicle in which two diametrically-opposed shoe holders (14, lo) are operated by two levers (22, 3o) carrying respective pins (40, 42) for articulation to an interconnecting tie rod (44). One of the two pins (42) can be moved closer to the other by means of a screw-and-nut device (48, 50) for the recovery of play due to wear of the shoes, whose intervention is effected automatically, as a result of the operation of the brake, by a rack (58) movable by means of a flexible cable transmission (76, 78) and through a one-way clutch (94).

FIG. 1

EP 0 248 770 A2

**Description**

Shoe brake for railway vehicles

The present invention relates in general to shoe brakes for the wheels of railway vehicles.

More particularly, the invention concerns a brake including two shoe holders located in diametrally opposite positions relative to the wheel and articulated to two operating levers which are themselves articulated, one at its upper end to a movable cross member driven by a pressurised-fluid actuator and the other directly to the structure of the vehicle, the two levers carrying at their lower ends respective pins for articulation to a longitudinal interconnecting tie rod, one of the pins being connected to the tie rod so that it can be moved closer to the other pin by means of a screw-and-nut device for the recovery of the play due to wear of the shoes.

In known devices for the recovery of the play, the screw of the screw-and-nut device is rotatable and the nut is movable relative to the tie rod and carries the movable pin. In these known solutions, the intervention of the device is achieved manually by means of a suitable tool, the screw being turned to cause the corresponding advance of the nut by an amount corresponding to the wear of the shoes and the screw then being locked in its new position by the tightening of a retaining nut.

These operations are obviously inconvenient and require relatively long operating times. Moreover, the action of recovery of the play due to wear cannot be carried out at intervals, during periodic stops for maintenance of the vehicle, so that this action has limited effectiveness in practice.

The object of the present invention is to avoid these disadvantages and to provide a brake of the type defined at the beginning in which the recovery of the play due to wear of the shoes can be achieved automatically in a continuous and effective manner, without any need for external manual intervention.

According to the invention, this object is achieved by the fact that the device for the recovery of play due to wear of the shoes includes a rack drive member movable by means of a flexible cable transmission operatively associated with the movable cross member to effect automatically, through a one-way clutch device, the rotation of the nut and the consequent advance of the screw carrying the articulation pin.

By virtue of this characteristic, a constant and precise recovery of the play is obtained in use since the two pins for articulating the levers to the connecting tie rod are automatically brought closer to each other by the exact amount corresponding to the wear of the shoes encountered during each braking cycle.

According to the invention, the rack is slidable within a housing fixed to the interconnecting tie rod against the action of resilient return means and meshes with a sprocket coupled to the nut through a one-way clutch arranged to transmit motion between the rack and the nut solely in the sense corresponding to the return of the rack under the action of the resilient return means.

Preferably, the screw is of the reversible type and the recovery device further includes a retaining ratchet gear for preventing the rotation of the nut corresponding to the withdrawal of the screw.

The one-way clutch and the retaining ratchet gear are conveniently associated with a sleeve coaxial with the nut and coupled thereto by means of a coupling with frontal teeth, under the action of resilient thrust means.

The invention will now be described in detail with reference to the appended drawings, provided purely by way of non-limiting example, in which:

Figure 1 is a schematic side elevational view of a wheel of a railway vehicle provided with a shoe brake according to the invention,

Figure 2 is a sectional view taken on the line II-II of Figure 1, on an enlarged scale,

Figure 3 is a cross-sectional view taken on the line III-III of Figure 2,

Figure 4 is a sectional view taken on the line IV-IV of Figure 3, and

Figure 5 is a section taken on the line V-V of Figure 3.

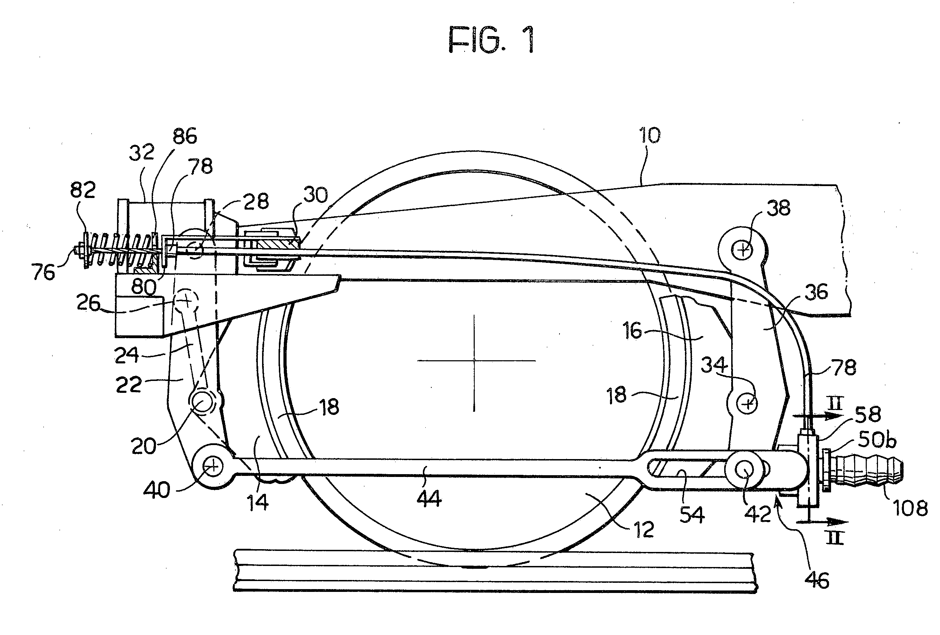

With reference initially to Figure 1, part of the structure of the chassis of a railway vehicle is indicated 10 and carries in known manner a wheel 12 provided with a brake device including two linings or shoe holders 14, 16 located on diametrally opposite sides of the wheel 12 and carrying respective brake shoes 18.

The shoe holder 14 is supported for pivoting about a transverse pin 20 by an operating lever 22 supported in its turn by a hanger 24 articulated at its lower end to the pin 20 and at its upper end 26 to the structure 10 of the bogie.

The upper end of the operating lever 22 is articulated about a transverse pin 28 carried by a cross member 30 movable longitudinally of the structure 10 by means of a pneumatic cylinder 32. The cross member 30 connects the cylinder 32 to a similar cylinder (not illustrated) associated with the other wheel of the axle of the bogie, in known manner.

The other shoe holder 16 is pivotally mounted about a transverse pin 34 carried by an operating lever 36 articulated at its upper end 38 to the structure 10.

The two levers 22 and 36 carry respective transverse pins 40, 42 at their lower ends for the articulation of a longitudinal interconnecting tie rod 44. While the position of the pin 40 relative to the tie rod 44 is fixed, that of the pin 42 is variable longitudinally by means of a device, generally indicated 46, for the automatic recovery of the brake play due to wear of the shoes 18.

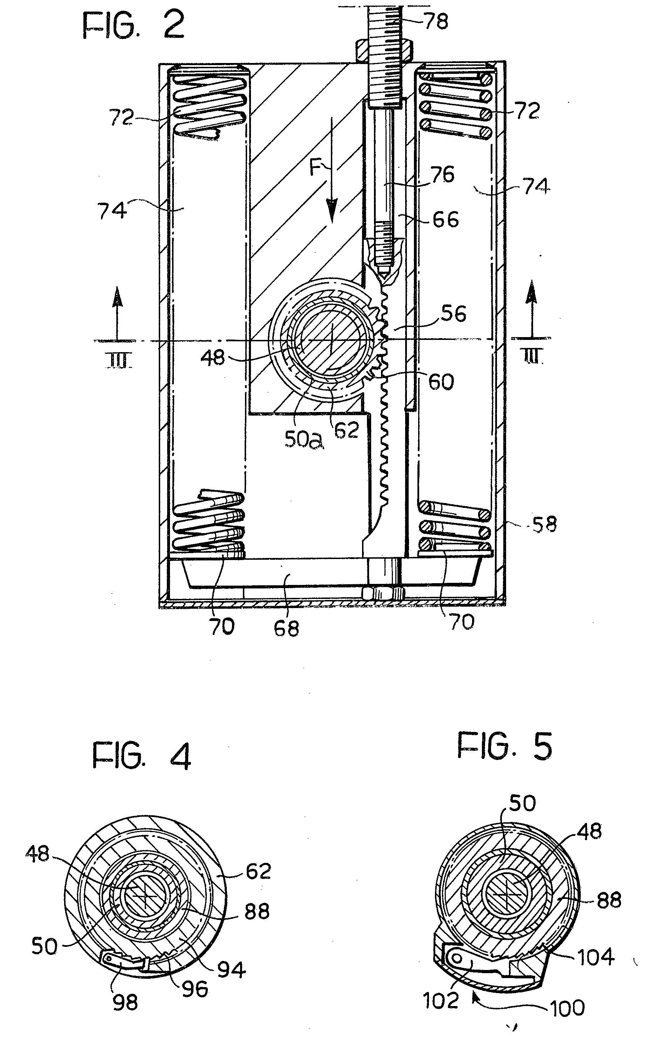

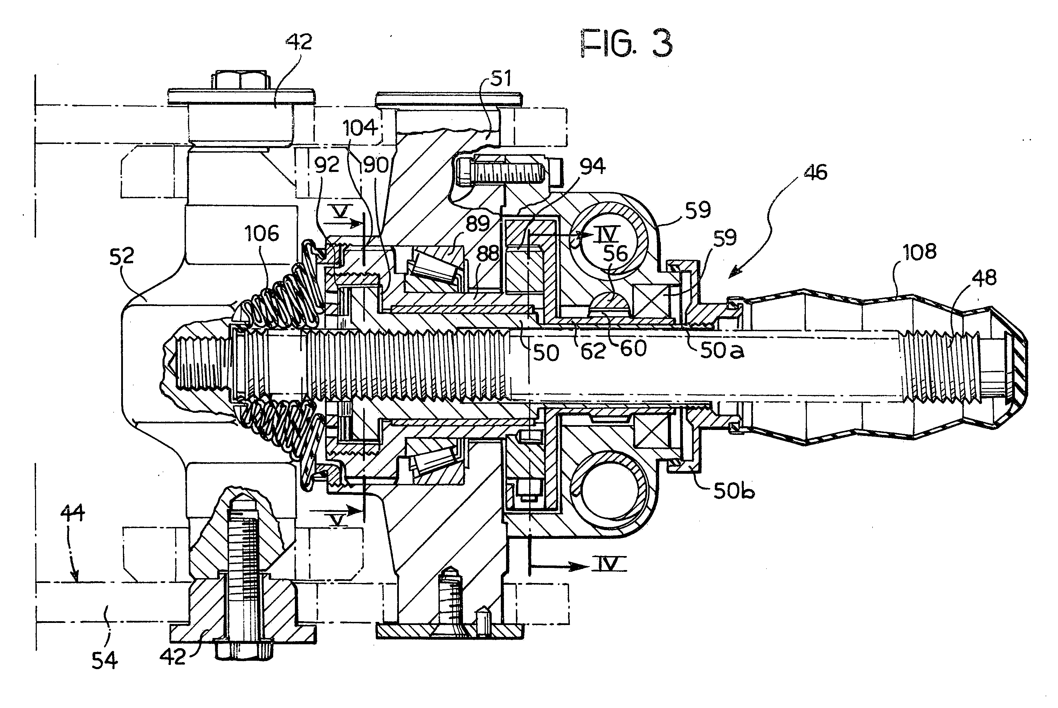

With reference in greater detail to Figures 2 to 5, the recovery device 46 comprises a screw 48 engaged in a nut 50 rotatable within a housing 51 fixed to the end of the tie rod 44. The inner end of the screw 48 is screwed into a slider 52 carrying the pin 42. In effect, this pin 42 is formed by two half-pins fixed coaxially on opposite sides of the slider 52 and slidably guided within longitudinal slots 54 formed in the tie rod 44. As a result of this assembly, the translation of the screw 48 causes a corresponding translation of the slider 52, and hence of the two half-pins 42, along the axis of the tie rod 44.

The translation of the screw 48 corresponding to the movement of the pin 42 closer to the pin 40 is effected by means of a rack 06 axially slidable within a vertical portion 58 of the housing 51 and engaging a sprocket 60 formed on a bush 62 supported rotatably by the housing 58, with the interposition of a rolling bearing 59, on an axial appendage 50a of the nut 50.

The rack 56 is carried by a shaft 66 which, at its lower end, carries a plate 68 the ends of which define two lower supports 70 for a pair of helical compression springs 72 inserted in two axial holes 74 in the housing 58 and reacting at their upper ends against the latter.

The shaft 66 is connected at its upper end to one end of a flexible cable 76 inserted in a sheath 78 clamped at one end relative to the housing 58. The sheath 78 extends through the structure 10 of the bogie and reacts at its opposite end against a bracket 80 fixed behind the movable cross member 30. The corresponding end of the flexible cable 76 projects from the sheath 78 and is anchored to a plate 82 against which reacts one end of a helical compression spring 84 whose opposite end bears against a support 86 fixed to the structure 10.

The movement imparted by the rack 56 to the sprocket 60 is transmitted by the bush 62 to the nut 50 through a sleeve 88 fitted coaxially on the nut 50 and supported within the housing 51 by means of a rolling bearing 89. The sleeve 88 is coupled to the nut 50 for rotation by a coupling 90 with frontal teeth, under the axial thrust of a cup spring 92.

Between the bush 62 and the sleeve 88 is a one-way clutch, indicated 94. As best seen in Figure 4, this clutch comprises, in practice, a serration 96 carried by the sleeve 88 and cooperating with a ratchet gear pawl 98 carried by the bush 62. The arrangement of the one-way clutch 94 is such that the movement of the rack 56 is imparted to the nut 50 only when the rack 56 moves downwardly (that is, in the direction of the arrow F in Figure 2) under the return action exerted by the springs 72 as a result of an upward translational movement (that is, in the direction opposite to the arrow F) of the rack 56 effected, in the manner clarified below, by the traction exerted by the flexible cable 76. In these circumstances, the downward movement of the rack 76 is translated into a rotation of the nut 50 corresponding to the advance of the screw 48, and hence of the two half-pins 42, in the direction of the pin 40.

It should be noted that the screw 48 is a reversible screw. Hence, in order to prevent unscrewing of this screw 48 from the nut 50 in use, a retaining ratchet gear 100 is provided. As best seen in Figure 5, this ratchet gear includes a pawl 102 carried by the housing 51 and cooperating with a second serration 104 of the sleeve 88.

The device 46 further includes a manually-operable part 50b coupled to the axial tang 50a of the nut 50 for effecting its manual unscrewing from the exterior, and protective bellows 106, 108 interposed between the end of the screw 48 and the housing 51 to protect the device from atmospheric agents.

The operation of the automatic recovery device 46 is as follows.

When braking is effected, the pneumatic actuator 32 causes the movement of the cross member 30 and hence, through the operating levers 22 and 36 and the interconnecting tie rod 44, the closing of the shoes 18 on the wheel 12.

In the case of wear of the shoes 18 due to a previous braking action, the cross member 30 effects a longer travel than the normal travel for closing the shoes 18, compressing the sheath 78 and hence putting the flexible cable 76 under traction. Consequently, the rack 56 moves in the opposite direction from the arrow F towards to the raised position and stays in this position during braking.

When this action has ceased, the cross member 30 returns to its starting position and the rack 56 slides downwardly in the direction of the arrow F under the action of the two springs 72. As a result of this sliding, the sprocket 60 imparts a corresponding rotation to the nut 50 through the one-way clutch 94, as a result of which the screw 48 with the slider 52 and the half-pins 42 advances along the tie rod 44 towards the pin 40 by an amount corresponding to the recovery of the play due to wear of the shoes 18. The rotation of the nut 50 in this case is allowed by the retaining ratchet gear 100, while any subsequent tendency to rotate in the opposite sense during subsequent braking is prevented by this gear.

Thus, the entire wear of the shoes 18 is recovered automatically.

During the recovery, the spring 84 acts as a safety member in the event of an excessive stroke of the cylinder 32 and hence of the cross member 30, for example, in the case of loss of the shoes 18 or any non-closure of these on the wheel 12 in case of replacement, in order to avoid anomalous forces on the regulator 46.

In order to carry out the eventual replacement of shoes 18 which are completely worn, it suffices to operate the manually-operable part 50b with a suitable tool, an axial thrust first being exerted so as to disengage the frontal-tooth coupling 90 between the nut 50 and the sleeve 88,and the nut 50 then being unscrewed with the consequent withdrawal of the screw 48 until the half-pins 42 have been moved completely away from the pin 40.

Should the shoes 18 not close again after their replacement, the regulator 46 automatically brings the shoes closer together after a certain number (for example, four) of braking and brake release operations.

## Claims

1. A brake for a wheel of a railway vehicle, including two shoe holders located in diametrally opposite positions relative to the wheel and articulated to two operating levers which are themselves articulated, one at its upper end to a movable cross member driven by a pressurised-fluid actuator and the other directly to the structure of the vehicle, the two levers carrying at their lower ends respective pins for articulation to a longitudinal interconnecting tie rod, one of the pins being connected to the tie rod so that it can be moved closer to the other pin by means of a screw-and-nut device for the recovery of the play due to wear of the shoes, characterised in that the recovery device (46) includes a rack drive member (56) movable by means of a flexible cable transmission (76, 78) operatively associated with the movable cross member (30) to effect automatically, through a one-way clutch device (94), the rotation of the nut (50) and the consequent advance of the screw (48) carrying the articulation pin (42).

2. A brake according to Claim 1, characterised in that the rack (56) is slidable within a housing (58) fixed to the interconnecting tie rod (44) against the action of resilient return means (72) and meshes with a sprocket (60) coupled to the nut (50) through a ratchet gear (94) for transmitting drive between the rack (56) and the nut (50) solely in the direction corresponding to the return of the rack (56) under the action of the resilient return means (72).

3. A brake according to Claim 2, characterised in that the screw (48) is of the reversible type, and in that the recovery device (46) further includes a retaining ratchet gear (100) for preventing the rotation of the nut (50) corresponding to the withdrawal of the screw (48).

4. A brake according to the preceding claims, characterised in that the one-way clutch (94) and the retaining ratchet gear (100) are associated with a sleeve (88) coaxial with the nut (50) and coupled thereto for rotation by means of a coupling (90) with frontal teeth, under the action of the resilient thrust means (92).

5. A brake according to Claim 4, characterised in that the nut (50) has an axial appendage (50a) carrying a manually-operable part (50b) accessible from the exterior of the device (46) for disengaging the coupling (90) with frontal teeth and effecting the rotation of the nut (50) corresponding to withdrawal of the screw (48) to allow the replacement of the shoes (18).

6. A brake according to any one of the preceding claims, characterised in that the flexible cable transmission (76, 78) has an associated resilient safety device (88) against excess travel of the movable cross member (30).

7. A brake according to any one of the preceding claims, characterised in that the recovery device (46) has an associated operating lever (36) which is articulated directly to the structure of the vehicle (10).

# FIG. 1

024877Ø

0248770

FIG. 2

FIG. 4

FIG. 5

FIG. 3